(19) Europäisches Patentamt
European Patent Office
Office européen des brevets

(11) **EP 3 658 390 B1**

(12) **FASCICULE DE BREVET EUROPEEN**

(45) Date de publication et mention de la délivrance du brevet:
**17.05.2023 Bulletin 2023/20**

(21) Numéro de dépôt: **18742741.4**

(22) Date de dépôt: **11.07.2018**

(51) Classification Internationale des Brevets (IPC):
**B60C 11/03** *(2006.01)*   **B60C 11/12** *(2006.01)*
**B60C 11/00** *(2006.01)*

(52) Classification Coopérative des Brevets (CPC):
**B60C 11/005; B60C 11/1218; B60C 11/1281;**
B60C 11/0302; B60C 2011/0025; B60C 2011/1213

(86) Numéro de dépôt international:
**PCT/EP2018/068730**

(87) Numéro de publication internationale:
**WO 2019/020368 (31.01.2019 Gazette 2019/05)**

(54) **PNEUMATIQUE AVEC BANDE DE ROULEMENT COMPORTANT UNE SCULPTURE ÉVOLUTIVE AVEC INCISIONS**

REIFEN MIT LAUFFLÄCHE MIT EINEM SICH ENTWICKELNDEN LAUFFLÄCHENPROFIL MIT LAMELLEN

TYRE WITH TREAD COMPRISING AN EVOLVING TREAD PATTERN WITH SIPES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.07.2017 FR 1757039**

(43) Date de publication de la demande:
**03.06.2020 Bulletin 2020/23**

(73) Titulaire: **Compagnie Générale des Etablissements Michelin**
**63000 Clermont-Ferrand (FR)**

(72) Inventeurs:
• **BLOUIN, Damien**
**63040 Clermont-Ferrand Cedex 09 (FR)**

• **BONNETON, Quentin**
**63040 Clermont-Ferrand Cedex 09 (FR)**

(74) Mandataire: **Desbordes, Guillaume**
**Manufacture Française des Pneumatiques Michelin**
**23, place des Carmes-Déchaux**
**DCJ/PI - F35 - Ladoux**
**63040 Clermont-Ferrand Cedex 9 (FR)**

(56) Documents cités:
**EP-A2- 0 540 340      EP-A2- 0 914 975**
**WO-A1-2017/105496    JP-A- H05 254 314**

**Description**

La présente invention concerne un pneumatique avec une bande de roulement comportant une sculpture évolutive avec des incisions, notamment un pneumatique de type pneumatique neige.

De manière connue en soi, un pneumatique pour roulages hivernaux, dit pneumatique neige, comporte une bande de roulement pourvue d'une pluralité d'incisions délimitant des lames de gomme présentant des arêtes aptes à venir gratter la neige au cours d'un roulage sur une chaussée enneigée. Ceci améliore l'adhérence sur chaussée enneigée.

L'action des arêtes sur la chaussée est d'autant plus importante lorsque la bande de roulement est à l'état neuf. En effet, dans cet état, les lames de gomme présentent un grand élancement, c'est-à-dire une grande hauteur pour une largeur faible relativement à cette hauteur. Ainsi, lorsque les lames pénètrent dans l'empreinte de contact avec la chaussée, celles-ci basculent. Les pressions qu'exercent les arêtes des lames sur la chaussée sont alors augmentées.

Avec l'usure de la bande de roulement, la hauteur des lames diminue et la déformation de ces lames, lorsqu'elles pénètrent dans l'empreinte de contact, décroît également. En conséquence, l'effet de grattage des arêtes diminue avec l'usure de la bande de roulement.

On comprend donc qu'il existe un besoin d'améliorer l'adhérence des pneumatiques neige, et ceci même à un niveau d'usure avancé. Les documents WO 2017/105496 A1, EP 0 540 340 A2, EP 0 914 975 A2 et JP H05 254314 A divulguent des pneumatiques comportant une bande de roulement comprenant une pluralité de blocs séparés à l'état neuf dans le sens circonférentiel par des rainures et pourvus de faces de contact formant chacune une partie de la surface de roulement de ladite bande de roulement, chaque bloc de ladite pluralité de blocs étant pourvu d'au moins une incision s'étendant à partir de ladite face de contact, présentant une largeur variable dans le sens de sa profondeur, dite incision complexe, ladite largeur étant maximale dans une partie distale de ladite incision complexe.

L'invention concerne un pneumatique comportant une bande de roulement comprenant une pluralité de blocs séparés à l'état neuf dans le sens circonférentiel par des rainures et pourvus de faces de contact formant chacune une partie de la surface de roulement de ladite bande de roulement.

Chaque bloc de ladite pluralité de blocs est pourvu d'au moins une incision s'étendant à partir de ladite face de contact, de profondeur Pc et présentant une largeur variable dans le sens de la profondeur Pc, dite incision complexe. Ladite largeur est maximale dans une partie distale de ladite incision complexe.

Selon une caractéristique générale du pneumatique, la bande de roulement comprend à l'état neuf une première couche de matière délimitant la surface de roulement et au moins une deuxième couche de matière radialement à l'intérieur de ladite première couche. La première couche de matière est formée dans une première composition caoutchouteuse et ladite deuxième couche de matière est formée dans une deuxième composition caoutchouteuse différente de la première composition caoutchouteuse.

Selon une autre caractéristique générale du pneumatique, ladite incision complexe et les rainures séparant les blocs sont entièrement formées dans la première couche de matière. Latéralement de part et d'autre de ladite incision complexe, la deuxième couche de matière s'étend, vue en coupe transversale dans ledit bloc, au-delà du fond de ladite incision complexe en direction de la face de contact dudit bloc.

Par « pneumatique », on entend tous les types de bandages élastiques soumis à une pression interne ou non.

Par « bande de roulement » d'un pneumatique, on entend une quantité de matière caoutchoutique délimitée par des surfaces latérales et par deux surfaces principales dont l'une, appelée surface de roulement, est destinée à entrer en contact avec une chaussée lorsque le pneumatique roule.

Par « composition caoutchouteuse », on entend une composition de caoutchouc comprenant au moins un élastomère et une charge.

Par « rainure », on entend une découpure générant des parois de matière opposées en vis-à-vis. La distance entre les parois de matière de la rainure est telle que ces parois ne peuvent pas venir en contact l'une contre l'autre dans des conditions usuelles de roulage. Cette distance pour une rainure peut par exemple être supérieure à 2 millimètres (mm).

Par « bloc », on entend un élément en relief délimité par des rainures et comprenant des parois ou faces latérales et la face de contact destinée à venir en contact avec la chaussée pendant le roulage.

Par « incision », on entend une découpure générant des parois de matière opposées en vis-à-vis. La distance ou espacement entre les parois de matière de l'incision est appropriée pour permettre la mise en contact au moins partielle de ces parois lors du passage dans l'empreinte de contact avec le sol.

Chaque incision complexe est délimitée par deux parois de matière en vis-à-vis, l'espacement entre ces parois étant variable le long de sa profondeur Pc. Autrement dit, chaque incision complexe comprend à une certaine profondeur un élargissement destiné à former une rainure.

Les élargissements des incisions complexes permettent de générer des rainures sur la surface de la bande de roulement lorsque cette bande de roulement atteint un certain niveau d'usure. Ces rainures constituent des réservoirs aptes à stocker de la neige sur une chaussée enneigée ou encore à évacuer de l'eau sur une chaussée humide. Ceci permet d'améliorer l'adhérence du pneumatique sur chaussée enneigée ou sur une chaussée humide, à un état d'usure avancé de la bande de roulement.

En outre, la disposition particulière de la deuxième couche de matière par rapport aux fonds des incisions complexes favorise encore l'obtention d'une bonne adhérence sur neige ou sur chaussée humide lorsque la bande de roulement a atteint un certain niveau d'usure prédéterminé. Lorsque ce niveau d'usure prédéterminé est atteint, la surface de roulement de la bande de roulement est formée à la fois par la première couche de matière et par la deuxième couche de matière.

Par exemple, la composition caoutchouteuse de la deuxième couche de matière peut être spécialement adaptée pour favoriser l'adhérence sur neige par rapport à l'adhérence sur chaussée humide, ou inversement. La composition caoutchouteuse de la première couche de matière peut par exemple être adaptée pour obtenir un équilibre entre l'adhérence sur neige et l'adhérence sur chaussée humide.

Les élargissements des incisions complexes associés à l'apparition de la deuxième couche de matière sur la surface de roulement de la bande de roulement permettent de prolonger les caractéristiques favorables d'adhérence sur sol enneigé ou sol mouillé malgré l'usure avancée de la bande de roulement.

On peut ajuster le niveau d'usure déclenchant l'apparition de la deuxième couche de matière sur la surface de roulement de la bande de roulement. De préférence, la distance radiale séparant le fond de ladite incision complexe et le sommet de la deuxième couche de matière situé latéralement de chaque côté de ladite incision complexe est comprise entre 1.5 mm et 5 mm.

Par ailleurs, la première couche de matière supérieure délimitant la surface de roulement a aussi pour effet de protéger la deuxième couche de matière inférieure, notamment au fond des rainures séparant les blocs. La composition caoutchouteuse de la première couche de matière peut être spécialement adaptée pour résister notamment aux agressions extérieures, par exemple la pénétration de cailloux, et au vieillissement et aux craquelures. La première couche de matière qui protège en totalité la deuxième couche de matière lorsque le pneu est neuf, puis qui protège en partie cette deuxième couche lorsque le pneu est usé permet d'obtenir une bonne tenue du pneumatique dans le temps.

Selon un mode de réalisation particulier avantageux, en considérant ladite coupe transversale, la deuxième couche de matière s'étend latéralement de part et d'autre de ladite incision complexe au-delà de la hauteur T d'un témoin d'usure faisant saillie à partir du fond d'une des rainures.

L'interface entre les première et deuxième couches de matière peut présenter un profil ondulé.

Avantageusement, chaque portion de la deuxième couche de matière située au-delà du fond de ladite incision complexe s'étend à l'intérieur dudit bloc le long de la majeure partie de la portion de la première couche de matière qui entoure ladite incision complexe.

L'écart entre le module complexe de cisaillement dynamique G* (23°C, 10%, 10Hz) de la première composition caoutchouteuse et celui de la deuxième composition caoutchouteuse peut être compris entre 0 et 40 %, préférentiellement compris entre 10 et 30 %.

Le « module complexe » G* est défini par la relation suivante :

$$G* = \sqrt{(G'^2 + G''^2)}$$

dans laquelle G' représente le module élastique et G" représente le module visqueux. L'angle de phase $\delta$ entre la force et le déplacement traduit en perte dynamique tan($\delta$) est égal au rapport G"/G'. Les termes modules complexes, élastiques et visqueux désignent des propriétés dynamiques bien connues de l'homme du métier.

Ces propriétés sont mesurées sur un viscoanalyseur de type Metravib VA4000 sur des éprouvettes vulcanisées.

Les mesures de propriétés dynamiques sont réalisées de la manière suivante :

1-L'éprouvette collée (issue du pneu ou d'une plaque vulcanisée).

Ces propriétés sont mesurées sur des éprouvettes collées extraites de la bande de roulement d'un pneu ou d'une plaque vulcanisée Des éprouvettes telles que celles décrites dans la norme ASTM D 5992 - 96 (version publiée en Septembre 2006, initialement approuvée en 1996) à la figure X2.1 (mode de réalisation circulaire) sont utilisées. Le diamètre « d » de l'éprouvette est de 10 mm, avec une tolérance de 0 mm à + 0.04mm, (elle a donc une section circulaire de 78.5 mm2), l'épaisseur « L » de chacune des portions de composition caoutchouteuse est de 2 mm, avec une tolérance d'épaisseur de - 0.15 mm à + 0.20 mm, ce qui donne un ratio «d/L» de 5.

2-Mesure en balayage en température à contrainte imposée.

On enregistre la réponse d'un échantillon de composition caoutchouteuse vulcanisée soumis à une sollicitation sinusoïdale en cisaillement simple alterné, à la fréquence de 10 Hz à contrainte imposée (0.7 MPa), symétriquement autour de sa position d'équilibre. Une accommodation de l'éprouvette est réalisée préalablement à la mesure de balayage en température. L'éprouvette est pour cela sollicitée en cisaillement sinusoïdal à 10Hz, à 100% de déformation crête-crête, à 23°C.

La mesure en balayage en température est réalisée au cours d'une rampe de température croissante de 1,5°C par minute, depuis une température $T_{min}$ inférieure à la température de transition vitreuse $T_g$ du matériau, jusqu'à une température $T_{max}$ qui peut correspondre au plateau caoutchoutique du matériau. Avant de commencer le balayage, on stabilise l'échantillon à la température $T_{min}$ pendant 20 minutes pour avoir une température homogène au sein de l'échantillon. Les résultats exploités à la température et à la contrainte choisies sont généralement le module complexe de cisaillement dynamique G*, comprenant une partie élastique G', une partie visqueuse G" et l'angle de phase $\delta$ entre la force et le déplacement traduit en facteur de perte tan($\delta$), égale au rapport G"/G'. La température de transition vitreuse $T_g$ est la température à laquelle la perte dynamique tan($\delta$) atteint un maximum lors du balayage en température. Ainsi, cette méthode permet de déterminer la température de transition vitreuse $T_g$ de la composition caoutchoutique.

3-Balayage en déformation à température constante

Cette méthode permet de déterminer le module complexe de cisaillement dynamique G*. On enregistre la réponse d'un échantillon de composition caoutchouteuse vulcanisée soumis à une sollicitation sinusoïdale à la fréquence de 10Hz en cisaillement simple alterné symétriquement par rapport à sa position d'équilibre et à température stabilisée à 23°C. La mesure se compose de 2 phases successives : balayage de l'étendue des déformations de la plus faible à la plus élevée de 0.1% à 50% crête-crête (cycle aller) suivi d'un balayage de l'étendue des déformations de la plus élevée à la plus faible de 50% à 0.1% crête-crête (cycle retour). Avant de commencer la mesure, une période de stabilisation de l'éprouvette de 15mn à la température de mesure est appliquée. Les résultats exploités sont le module complexe de cisaillement dynamique G*, comprenant une partie élastique G', une partie visqueuse G" et l'angle de phase $\delta$ entre la force et le déplacement traduit en facteur de perte tan($\delta$), égale au rapport G"/G'. On peut extraire ces différents descripteurs à la déformation souhaitée comme par exemple le G*(23°C, 10%, 10Hz).

Afin de favoriser encore l'obtention de bonnes propriétés d'adhérence sur neige en fin de vie, l'écart de température de transition vitreuse entre la première composition caoutchouteuse et la deuxième composition caoutchouteuse est en valeur absolue compris entre 4°C et 30°C, et préférentiellement compris entre 5°C et 10°C.

De sorte à optimiser les performances du pneumatique sur chaussée mouillée en fin de vie, ladite incision complexe peut s'étendre de façon sensiblement parallèle à deux des rainures délimitant ledit bloc. En effet, l'évacuation de l'eau par les incisions complexe est favorisée avec une telle orientation.

Dans un mode de réalisation particulier, le fond de la partie distale de ladite incision complexe se raccorde, selon ladite vue en coupe, par un congé à chacune des parois de gomme délimitant ladite incision. Une telle orientation optimise le caractère moulable de l'incision.

Avantageusement, ladite incision complexe comprend une partie proximale qui s'étend à partir de la face de contact dudit bloc et qui présente une largeur sensiblement constante.

Ladite incision complexe peut comprendre une partie de jonction intermédiaire reliant la partie proximale à la partie distale et présentant une largeur qui varie progressivement le long de sa profondeur. Ainsi, on limite la génération de fissures dans la zone de gomme adjacente à ladite incision complexe. Alternativement, il est possible de prévoir que la partie proximale prolonge directement la partie distale de ladite incision complexe.

Dans un mode de réalisation, ladite incision complexe forme à l'état neuf de la bande de roulement une trace ondulée sur la face de contact dudit bloc. De cette manière, on optimise la rigidité du bloc lors du passage du contact avec le sol grâce aux blocages mécaniques réalisés par la trace ondulée. La trace ondulée peut par exemple présenter une forme en créneaux.

De préférence, ladite incision complexe sépare ledit bloc en deux parties de blocs sensiblement identiques. Par « deux parties de blocs sensiblement identiques », on entend que la différence de surface entre les faces de contact de ces deux parties de bloc est inférieure à 10%. Ceci favorise une usure uniforme dudit bloc.

Dans un mode de réalisation particulier, chaque bloc de ladite pluralité de blocs est pourvu en outre d'au moins une incision s'étendant à partir de la face de contact dudit bloc, de profondeur Ps inférieure à la profondeur Pc de ladite incision complexe et présentant une largeur sensiblement constante dans le sens de la profondeur Ps, dite incision simple. La partie distale de ladite incision complexe s'étend au moins en partie au-delà de ladite incision simple.

Avec cette conception particulière de la bande de roulement du pneumatique, il est prévu deux types différents d'incisions, à savoir les incision simples et les incisions complexes.

Chaque incision simple est délimitée par deux parois de matière en vis-à-vis et présente une largeur sensiblement constante dans toute sa profondeur Ps. Autrement dit, l'espacement entre les parois de matière de chaque incision simple est sensiblement constant.

En ajoutant les incisions simples aux incisions complexes, on vient créer des arêtes supplémentaires et on accentue l'effet de grattage sur la neige lors du début de vie du pneumatique. Comme les incisions complexes s'étendent dans la profondeur des blocs au-delà des incisions simples, ces incisions simples ne vont pas diminuer significativement la rigidité des blocs de gomme en fin de vie équipés des rainures en surface formées par les élargissement des incisions complexes.

Ainsi, la bande de roulement du pneumatique présente une bonne adhérence sur neige en début de vie sans que soit dégradée cette performance en fin de vie.

De préférence, latéralement de part et d'autre de ladite incision complexe, la deuxième couche de matière s'étend, vue en coupe, au-delà du fond de ladite incision complexe en direction de la face de contact dudit bloc tout en restant à distance du fond de ladite incision simple. Autrement dit, ladite incision simple est entièrement formée dans la première couche de matière de la bande de roulement.

Dans un mode de réalisation, ladite incision simple forme à l'état neuf de la bande de roulement une trace ondulée sur la face de contact dudit bloc. La trace ondulée formée par ladite incision simple peut par exemple présenter une forme identique à la trace ondulée formée par ladite incision complexe.

Alternativement ou en combinaison, ladite incision simple et/ou ladite incision complexe peuvent présenter des ondulations dans la profondeur dudit bloc.

Chaque bloc de ladite pluralité de blocs peut comprendre une pluralité d'incisions simples, ladite incision complexe étant disposée entre deux incisions simples.

Avantageusement, la bande de roulement est directionnelle. Par « bande de roulement directionnelle », on entend une bande dont les caractéristiques comportementales sont optimisées selon un sens de rotation prédéterminé.

Dans la description qui précède et qui va suivre, les bornes indiquées pour un domaine de valeurs sont comprises dans ce domaine, notamment dans les expressions « compris entre ».

La présente invention sera mieux comprise à la lecture de la description détaillée d'un mode de réalisation pris à titre d'exemple nullement limitatif et illustré par les dessins annexés sur lesquels :

- la figure 1 est une vue partielle en perspective d'une bande de roulement d'un pneumatique à l'état neuf selon un exemple de réalisation de l'invention,
- les figures 2 à 4 sont des vues partielles en perspective de la bande de roulement du pneumatique de la figure 1 selon différents niveaux d'usure, et
- la figure 5 est une vue en coupe selon l'axe V-V de la figure 1.

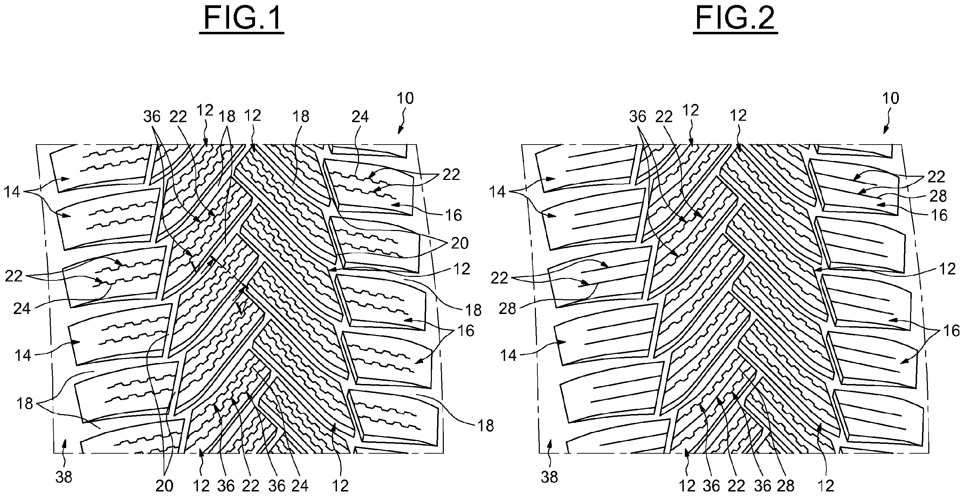

Sur la figure 1 est représentée partiellement une bande de roulement 10 d'un pneumatique à l'état neuf comprenant une pluralité de blocs 12 à 16. Sur la figure, les blocs référencés 12 sont ceux situés dans la partie centrale de la bande de roulement 10, et les blocs référencés 14 et 16 sont ceux situés dans les parties latérales de la bande.

Plusieurs rainures 18, 20 sont formées sur la bande de roulement 10 et délimitent les blocs 12 à 16. En considérant l'axe de rotation du pneumatique, les rainures 18 séparent les blocs 12 à 16 dans le sens circonférentiel tandis que les rainures 20 séparent ces blocs dans le sens axial. Ces rainures 20 s'étendent en zigzag dans le sens circonférentiel. Cela permet d'éviter les phénomènes de flambage de la bande de roulement 10 sous effet, et de maintenir une rigidité de celle-ci plus constante, notamment sous forte contrainte latérale en virage. Préférentiellement, contrairement aux rainures 18, la largeur des rainures 20 est inférieure à 2 mm, ces rainures 20 peuvent alors se fermer lors du passage dans l'empreinte de contact avec le col.

Dans un mode de réalisation, ladite incision complexe forme à l'état neuf de la bande de roulement une trace ondulée sur la face de contact dudit bloc. De cette manière, on optimise la rigidité du bloc lors du passage du contact avec le sol grâce aux blocages mécaniques réalisés par la trace ondulée.

Les profondeurs P des rainures principales 18, 20 peuvent être égales entre elles ou différentes. Dans l'exemple de réalisation illustré, les blocs 12 à 16 constituent une sculpture de forme générale en V conférant à la bande de roulement 10 un sens de roulage préférentiel.

Chaque bloc 12 à 16 comprend une face de contact formant une partie de la surface de roulement de bande de roulement 10, cette face de contact étant destinée à venir en contact avec une chaussée lors du roulage. Chaque bloc 12 à 16 comprend une pluralité d'incisions 22, 36 s'étendant dans l'épaisseur dudit bloc à partir de la face de contact. Chaque incision 22, 36 s'étend sur cette face de contact selon une direction d'extension donnée. En considérant l'axe de rotation du pneumatique, cette direction d'extension présente une composante circonférentielle et circonférentielle axiale. Selon les valeurs prises par la composante circonférentielle et par la composante axiale, l'incision peut être dite soit transversale (composante circonférentielle nulle), soit circonférentielle (composante axiale nulle), ou soit oblique (composantes circonférentielles et axiales non nulles). Dans l'exemple de réalisation illustré, les incisions 22, 36 sont transversales et obliques.

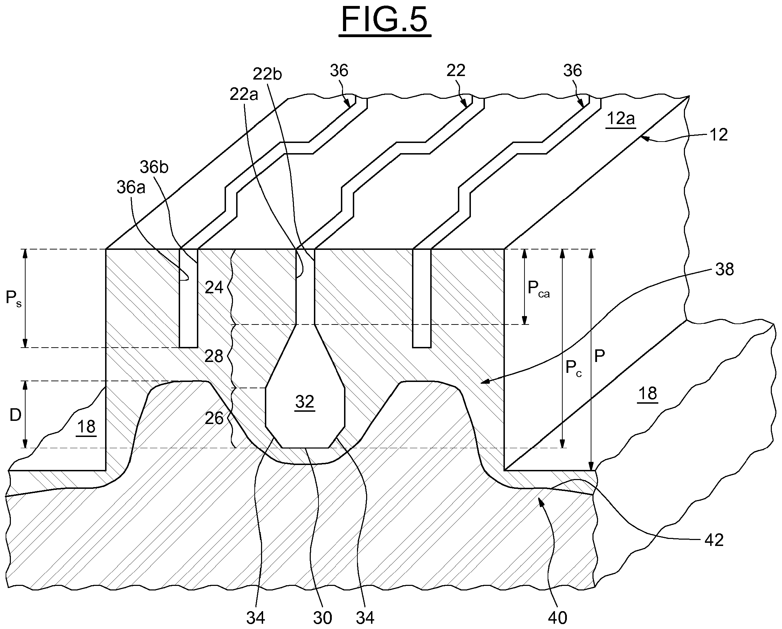

La figure 5 est une vue en coupe transversale d'un bloc 12 de la partie centrale de la bande de roulement de la figure 1. Le bloc 12 comprend une incision 22 s'étendant à partir de la face de contact 12a et présentant une profondeur Pc. La largeur de l'incision 22 est variable dans le sens de la profondeur Pc. Dans la suite de la description, cette incision 22 sera nommée incision complexe. L'incision 22 complexe est délimitée par deux parois 22a, 22b de matière en vis-à-vis, l'espacement entre ces parois étant variable le long de la profondeur Pc. La profondeur Pc de l'incision 22 complexe est inférieure à la profondeur P des rainures 18. A titre indicatif, la profondeur Pc peut être inférieure d'au moins 0.5 mm à la profondeur P des rainures 18. La profondeur Pc de l'incision 22 complexe peut par exemple être comprise entre 6 mm à 10 mm.

L'incision 22 complexe comprend une partie proximale 24 s'étendant à partir de la face de contact 12a et présentant une largeur constante, une partie distale 26 qui définit la largeur maximale de ladite incision et une partie de jonction 28 reliant la partie proximale 24 à la partie distale 26. Le fond 30 de la partie distale forme le fond de l'incision 22 complexe.

La partie proximale 24 de l'incision complexe s'étend radialement à partir de la face de contact 12a et présente une profondeur Pca. La largeur de la partie proximale 24 est constante le long de la profondeur Pca. La partie proximale 24 s'étend de manière rectiligne dans la profondeur du bloc 12.

En dessous de la profondeur Pca, l'incision 22 complexe s'élargit pour définir un enfoncement ou élargissement 32. L'incision 22 complexe a une forme dite en « goutte d'eau ». L'élargissement 32 est formé par la partie de jonction 28 et par la partie distale 26. La partie distale 26 de l'incision complexe présente une largeur globalement constante. Le fond 30 de la partie distale se raccorde par un congé 34 à chaque paroi 22a, 22b de matière de l'incision. La largeur de la partie de jonction 28 est minimale dans la zone de liaison à la partie proximale 24, et est maximale dans la zone de liaison à la partie distale 26. La variation de la largeur de la partie de jonction 28 est progressive le long de sa profondeur.

Dans l'exemple de réalisation illustré, le bloc 12 comprend également des incisions 36 s'étendant à partir de la face de contact 12a de manière rectiligne dans la profondeur du bloc 12. Les incisions 36 sont identiques entre elles et sont ici au nombre de deux. Chaque incision 36 présente une profondeur Ps. La largeur de chaque incision 36 est constante dans le sens de la profondeur Ps. Dans la suite de la description, les incisions 36 seront nommées incisions simples. Chaque incision 36 simple est délimitée par deux parois 36a, 36b de matière en vis-à-vis, l'espacement entre ces parois étant constant le long de la profondeur Ps. La profondeur Ps des incisions 36 simples est inférieure à la profondeur Pc de l'incision 22 complexe. La profondeur Ps des incisions 36 simples est supérieure à la profondeur Pca de la partie proximale 24 de l'incision complexe. La profondeur Ps des incisions 36 simples ne s'étend pas au-delà de la moitié de la profondeur de la partie de jonction 28. A titre indicatif, la profondeur Ps des incisions 36 simples peut par exemple être comprise entre 2 mm à 6 mm.

Dans l'exemple de réalisation illustré, l'incision 22 complexe est disposée de sorte à séparer le bloc 12 en deux parties de blocs sensiblement identiques. L'incision 22 complexe est disposée entre les deux incisions 36 simples. En se référant de nouveau à la figure 1, les incisions 22, 36 s'étendent ici sur toute la largeur du bloc 12 considéré. Chaque incision 22, 36 débouche sur des faces latérales du bloc 22 qui sont délimitées par les rainures 18, 20. Chaque incision 22, 36 s'étend sensiblement parallèlement aux rainures 18 qui délimitent le bloc 12 dans le sens circonférentiel. Dans l'exemple de réalisation illustré, chaque incision 22, 36 forme à l'état neuf une trace ondulée sur la face de contact 12a du bloc.

Comme cela est visible à la figure 5, la bande de roulement comprend à l'état neuf du pneumatique une première couche de matière 38 délimitant la face de contact 12a, et une deuxième couche de matière 40 radialement à l'intérieur de ladite première couche. Les première et deuxième couches de matière 38, 40 sont en contact l'une contre l'autre. Les première et deuxième couches de matière 38, 40 sont réalisées respectivement dans des première et deuxième compositions caoutchouteuses qui sont différentes l'une de l'autre. Les incisions 22, 34 ainsi que les rainures 18 et 20 (figure 1) sont entièrement formées dans la première couche de matière 38.

En considérant la vue en coupe transversale du bloc 12 de cette figure 5, la deuxième couche de matière 40 de la bande de roulement s'étend à l'intérieur du bloc au-delà du fond 30 de l'incision complexe en direction de la face de contact 12a dudit bloc, et ce, latéralement de part et d'autre de l'incision. La deuxième couche de matière 40 remonte radialement en direction de la face de contact 12a en restant toutefois à distance du fond des incisions 36 simples. Dans l'exemple de réalisation illustré, la deuxième couche de matière 40 remonte de chaque côté de l'incision 22 complexe jusqu'à la partie de jonction 28 de l'incision. En variante, la deuxième couche de matière 40 peut remonter de chaque côté de l'incision 22 complexe uniquement jusqu'à la partie distale 26 de l'incision.

A l'intérieur du bloc 12, la génératrice supérieure de la deuxième couche de matière 40 présente un profil ondulé comprenant une alternance de sommets et de creux. Un sommet de la génératrice supérieure de la deuxième couche de matière 40 se trouve entre l'incision 22 complexe et chaque face latérale du bloc 12 qui est délimitée par une des rainures 18. A titre indicatif, la distance radiale D séparant le fond 30 de l'incision complexe et chacun de ces deux sommets de la génératrice supérieure de la deuxième couche de matière 40 est comprise entre 1.5 mm et 5 mm.

Un creux de cette génératrice supérieure est situé radialement sous le fond 30 de l'incision 22 complexe. Un autre creux de la génératrice supérieure est situé au voisinage de la base de chaque face latérale du bloc 12 qui est délimitée par une des rainures 18. Une interface 42 est formée entre la première couche de matière 38 et la deuxième couche de matière 40 de la bande de roulement. Plus précisément, l'interface 42 est formée par la génératrice supérieure de la deuxième couche de matière 40 et la génératrice inférieure de la première couche de matière 38. L'interface 42 présente un profil ondulé sensiblement sinusoïdal.

Dans l'exemple de réalisation illustré, chaque bloc 12 de la partie centrale de la bande de roulement comprend une incision 22 complexe et deux incisions 36 simples. Les blocs 14, 16 des parties latérales de la bande comprennent uniquement des incisions 22 complexes.

Comme indiqué précédemment, sur la figure 1 est représentée la bande de roulement 10 à l'état neuf du pneumatique. A l'état neuf, la hauteur des blocs 12 à 16 peut par exemple être comprise entre 6 mm à 10 mm.

Sur la figure 2 est représentée la bande de roulement 10 à un premier niveau d'usure. Ce niveau d'usure correspond à une usure qui est supérieure à la profondeur Pca des incisions 22 complexes et qui est inférieure à la profondeur Ps des incisions 36 simples. Lorsque ce niveau d'usure est atteint, les parties de jonction 28 des incisions complexes débouchent sur la surface de roulement de la bande de roulement 10. La surface de roulement reste formée exclusivement par la première couche de matière 38. Ce premier niveau d'usure peut par exemple correspondre à une hauteur des blocs 12 à 16 égale à 6 mm.

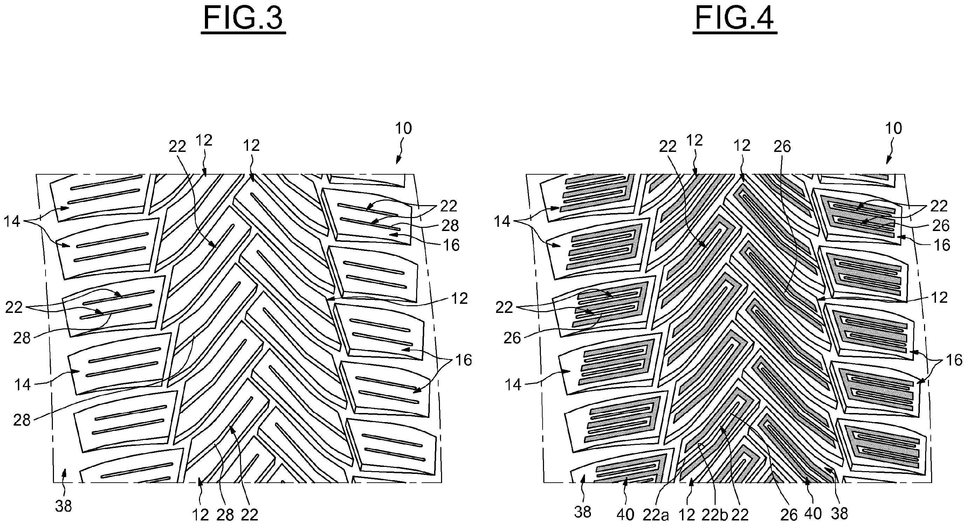

Sur la figure 3 est représentée la bande de roulement 10 à un deuxième niveau d'usure correspondant à une usure située entre le fond des incisions 36 simples et l'interface 42 entre les première et deuxième couches de matière 38, 40 (figure 5). Lorsque ce niveau d'usure est atteint, uniquement les parties de jonction 28 des incisions complexes débouchent sur la surface de roulement de la bande de roulement 10. La première couche de matière 38 délimite encore la surface de roulement. Ce deuxième niveau d'usure peut par exemple correspondre à une hauteur des blocs 12 à 16 égale à 4 mm.

Sur la figure 4 est représentée la bande de roulement 10 selon un troisième niveau d'usure qui correspond à une usure située entre l'interface 42 et le fond 30 des incisions complexe (figure 5). Ce troisième niveau d'usure correspond à un niveau d'usure avancé, proche de la fin d'usure dans laquelle l'épaisseur de la bande de roulement a atteint la hauteur T réglementaire d'un témoin d'usure (non représenté) de cette bande. Dans le cas d'un pneumatique pour un véhicule de tourisme, cette hauteur réglementaire est de 1.6 mm. Le troisième niveau d'usure illustré à la figure 4 peut par exemple correspondre à une hauteur des blocs 12 à 16 égale à 2.1 mm.

Lorsque ce troisième niveau d'usure est atteint, uniquement les parties de jonction 28, ou les parties distales 26, des incisions complexes débouchent sur la surface de roulement de la bande de roulement 10. Sur la figure 4, le niveau d'usure illustré déclenche l'apparition des parties distales 26 des incisions complexes sur la surface de roulement. Pour ce niveau d'usure, la première couche de matière 38 délimite avec la deuxième couche de matière 40 la surface de roulement de la bande de roulement 10. Sur la figure 4, la deuxième couche de matière 40 a été représentée en gris pour des raisons de clarté.

Au niveau de cette surface de roulement, en considérant un des blocs 12, une portion interne de la première couche de matière 38 s'étend le long des parois 22a, 22b de la partie distale 26 de chaque incision 22 et entoure ces parois. La deuxième couche de matière 40 s'étend le long du bloc 12 et entoure cette portion interne de la première couche de matière 38, et est elle-même entourée par une portion périphérique de la première couche de matière.

Comme indiqué précédemment, lorsque le niveau d'usure illustré à la figure 4 est atteint, la surface de roulement de la bande de roulement 10 est formée à la fois par la première couche de matière 38 et par la deuxième couche de matière 40.

La composition caoutchouteuse de la deuxième couche de matière 40 est avantageusement adaptée pour favoriser l'adhérence sur neige ou sur chaussée humide. La composition caoutchouteuse de la première couche de matière 38 peut quant à elle être spécialement adaptée pour favoriser la résistance à l'usure.

A titre indicatif, l'écart de température de transition vitreuse $T_g$ entre la première composition caoutchouteuse de la première couche de matière 38 et la deuxième composition caoutchouteuse de la deuxième couche de matière 40 est en valeur absolue compris entre 4°C et 30°C, et préférentiellement compris entre 6°C et 10°C. Dans un mode de réalisation particulier, la température de transition vitreuse $T_g$ de la première composition caoutchouteuse peut par exemple être égale à -25°C et la température de transition vitreuse $T_g$ de la deuxième composition caoutchouteuse peut par exemple être égale à -31°C.

De façon non limitative, la bande de roulement peut comporter une sous-couche en contact avec la deuxième couche de matière. A titre d'exemple, cette sous-couche est une sous-couche basse perte comportant une composition de caoutchouc ayant des pertes hystérétiques (P60) comprises entre 9 et 20, et une dureté shore A comprise entre 60 et 68.

L'invention a été illustrée sur la base d'un pneumatique comprenant une bande de roulement directionnelle. On ne sort pas du cadre de la présente invention lorsque le pneumatique comprend un autre type de bande de roulement.

## Revendications

**1.** Pneumatique comportant une bande de roulement comprenant une pluralité de blocs (12) séparés à l'état neuf dans le sens circonférentiel par des rainures (18) et pourvus de faces de contact formant chacune une partie de la surface de roulement de ladite bande de roulement, chaque bloc de ladite pluralité de blocs étant pourvu d'au moins une incision (22) s'étendant à partir de ladite face de contact, de profondeur Pc et présentant une largeur variable dans le sens de la profondeur Pc, dite incision complexe, ladite largeur étant maximale dans une partie distale (26) de ladite incision complexe, la bande de roulement comprend à l'état neuf une première couche de matière (38) délimitant la surface de roulement et au moins une deuxième couche de matière (40) radialement à l'intérieur de ladite première couche, la première couche de matière étant formée dans une première composition caoutchouteuse et ladite deuxième couche de matière étant formée dans une deuxième composition caoutchouteuse différente de la première composition caoutchouteuse, ladite incision (22) complexe et les rainures (18) séparant les blocs (12) sont entièrement formées dans la première couche de matière (38), **caractérisé en ce que** latéralement de part et d'autre de ladite incision complexe, la deuxième couche de matière (40) s'étend, vue en coupe transversale dans ledit bloc, au-delà du fond (30) de ladite incision complexe en direction de la face de contact dudit bloc.

**2.** Pneumatique selon la revendication 1, dans lequel la distance radiale séparant le fond (30) de ladite incision complexe et le sommet de la deuxième couche de matière situé latéralement de chaque côté de ladite incision complexe est comprise entre 1.5 mm et 5 mm.

3. Pneumatique selon la revendication 1 ou 2, dans lequel l'interface (42) entre les première et deuxième couches de matière présente un profil ondulé.

4. Pneumatique selon l'une quelconque des revendications précédentes, dans lequel chaque portion de la deuxième couche de matière (40) située au-delà du fond (30) de ladite incision complexe s'étend à l'intérieur dudit bloc le long de la majeure partie de la portion de la première couche de matière (38) qui entoure ladite incision complexe.

5. Pneumatique selon l'une quelconque des revendications précédentes, comprenant au moins un témoin d'usure de hauteur T faisant saillie à partir du fond d'une des rainures (18), et dans lequel, latéralement de part et d'autre de ladite incision complexe, la deuxième couche de matière (40) s'étend, vue en coupe transversale dans ledit bloc, au-delà de la hauteur T du témoin d'usure.

6. Pneumatique selon l'une quelconque des revendications précédentes, dans lequel l'écart de température de transition vitreuse entre la première composition caoutchouteuse et la deuxième composition caoutchouteuse est en valeur absolue compris entre 4°C et 30°C, et préférentiellement compris entre 5°C et 10°C, la température de transition vitreuse étant mesurée sur des éprouvettes telles que celles décrites dans la norme ASTM D 5992 - 96 à la figure X2.1.

7. Pneumatique selon l'une quelconque des revendications précédentes, dans lequel l'écart entre le module complexe de cisaillement dynamique G* (23°C, 10%, 10Hz) de la première composition caoutchouteuse et celui de la deuxième composition caoutchouteuse est compris entre 0 et 40 %, préférentiellement compris entre 10 et 30 %, les modules de cisaillement dynamique étant mesurés sur des éprouvettes telles que celles décrites dans la norme ASTM D 5992 - 96 à la figure X2.1.

8. Pneumatique selon l'une quelconque des revendications précédentes, dans lequel ladite incision complexe (22) s'étend de façon sensiblement parallèle à deux des rainures (18) délimitant ledit bloc.

9. Pneumatique selon l'une quelconque des revendications précédentes, dans lequel le fond (30) de la partie distale de ladite incision complexe se raccorde, selon ladite vue en coupe, par un congé (32) à chacune des parois de gomme (22a, 22b) délimitant ladite incision.

10. Pneumatique selon l'une quelconque des revendications précédentes, dans lequel ladite incision complexe (22) comprend une partie proximale (24) qui s'étend à partir de la face de contact dudit bloc et qui présente une largeur sensiblement constante.

11. Pneumatique selon la revendication 10, dans lequel ladite incision complexe (22) comprend une partie de jonction intermédiaire (28) reliant la partie proximale à la partie distale (26) et présentant une largeur qui varie progressivement le long de sa profondeur.

12. Pneumatique selon l'une quelconque des revendications précédentes, dans lequel ladite incision complexe (22) forme à l'état neuf de la bande de roulement une trace ondulée sur la face de contact dudit bloc.

13. Pneumatique selon l'une quelconque des revendications précédentes, dans lequel ladite incision complexe (22) sépare ledit bloc en deux parties de blocs sensiblement identiques.

14. Pneumatique selon l'une quelconque des revendications précédentes, dans lequel chaque bloc (12) de ladite pluralité de blocs est pourvu en outre d'au moins une incision (36) s'étendant à partir de la face de contact dudit bloc, de profondeur Ps inférieure à la profondeur Pc de ladite incision complexe et présentant une largeur sensiblement constante dans le sens de la profondeur Ps, dite incision simple, la partie distale (26) de ladite incision complexe s'étendant au moins en partie au-delà de ladite incision simple.

15. Pneumatique selon la revendication 14, dans lequel ladite incision simple est entièrement formée dans la première couche de matière (38) de la bande de roulement.

16. Pneumatique selon la revendication 14 ou 15, dans lequel chaque bloc de ladite pluralité de blocs comprend une pluralité d'incisions simples (36), ladite incision complexe (22) étant disposée entre deux incisions simples.

17. Pneumatique selon l'une quelconque des revendications précédentes, dans lequel la bande de roulement est directionnelle.

**Patentansprüche**

1. Reifen mit einem Laufstreifen, der eine Mehrzahl von Blöcken (12) umfasst, die im Neuzustand in Umfangsrichtung durch Rillen (18) getrennt sind und mit Kontaktseiten versehen sind, von denen jede einen Teil der Lauffläche des Laufstreifens bildet, wobei jeder Block der Mehrzahl von Blöcken mit mindestens einer Lamelle (22) versehen ist, die sich ausgehend von der Kontaktseite erstreckt, die Tiefe Pc hat und eine in Richtung der Tiefe Pc variable Breite aufweist, komplexe Lamelle genannt, wobei die Breite in einem distalen Teil (26) der komplexen Lamelle maximal ist, der Laufstreifen im Neuzustand eine erste Materialschicht (38) umfasst, die die Lauffläche begrenzt, und mindestens eine zweite Materialschicht (40) radial innerhalb der ersten Schicht, wobei die erste Materialschicht aus einer ersten Kautschukzusammensetzung gebildet ist und wobei die zweite Materialschicht aus einer zweiten Kautschukzusammensetzung gebildet ist, die von der ersten Kautschukzusammensetzung verschieden ist, die komplexe Lamelle (22) und die die Blöcke (12) trennenden Rillen (18) vollständig in der ersten Materialschicht (38) gebildet sind, **dadurch gekennzeichnet, dass** sich seitlich beidseits der komplexen Lamelle die zweite Materialschicht (40), im Querschnitt in dem Block betrachtet, über den Boden (30) der komplexen Lamelle hinaus in Richtung der Kontaktseite des Blocks erstreckt.

2. Reifen nach Anspruch 1, bei dem der radiale Abstand, der den Boden (30) der komplexen Lamelle und den Scheitelpunkt der zweiten Materialschicht, der seitlich von jeder Seite der komplexen Lamelle gelegen ist, trennt, zwischen 1,5 mm und 5 mm beträgt.

3. Reifen nach Anspruch 1 oder 2, bei dem die Grenzfläche (42) zwischen den ersten und zweiten Materialschichten ein gewelltes Profil aufweist.

4. Reifen nach einem der vorhergehenden Ansprüche, bei dem sich jeder Abschnitt der zweiten Materialschicht (40), der über den Boden (30) der komplexen Lamelle hinaus gelegen ist, im Inneren des Blocks entlang des Großteils des Abschnitts der ersten Materialschicht (38) erstreckt, die die komplexe Lamelle umgibt.

5. Reifen nach einem der vorhergehenden Ansprüche, der mindestens eine Verschleißanzeige mit der Höhe T, die vom Boden einer der Rillen (18) aus absteht, umfasst und bei dem sich seitlich beidseits der komplexen Lamelle die zweite Materialschicht (40), im Querschnitt in dem Block betrachtet, über die Höhe T der Verschleißanzeige hinaus erstreckt.

6. Reifen nach einem der vorhergehenden Ansprüche, bei dem die Glasübergangstemperaturdifferenz zwischen der ersten Kautschukzusammensetzung und der zweiten Kautschukzusammensetzung als absoluter Wert zwischen 4 °C und 30 °C und bevorzugt zwischen 5 °C und 10 °C beträgt, wobei die Glasübergangstemperatur an Probekörpern wie denen gemessen wird, die in der Norm ASTM D 5992-96 in Abbildung X2.1 beschrieben werden.

7. Reifen nach einem der vorhergehenden Ansprüche, bei dem die Differenz zwischen dem komplexen dynamischen Schermodul G* (23 °C, 10 %, 10 Hz) der ersten Kautschukzusammensetzung und dem der zweiten Kautschukzusammensetzung zwischen 0 und 40 %, bevorzugt zwischen 10 und 30 % beträgt, wobei die dynamischen Schermodule an Probekörpern wie denen gemessen werden, die in der Norm ASTM D 5992-96 in Abbildung X2.1 beschrieben werden.

8. Reifen nach einem der vorhergehenden Ansprüche, bei dem sich die komplexe Lamelle (22) im Wesentlichen parallel zu zweien der Rillen (18) erstreckt, die den Block begrenzen.

9. Reifen nach einem der vorhergehenden Ansprüche, bei dem sich der Boden (30) des distalen Teils der komplexen Lamelle, gemäß der Schnittansicht, über eine Ausrundung (32) an jede der Gummiwände (22a, 22b) anschließt, die die Lamelle begrenzen.

10. Reifen nach einem der vorhergehenden Ansprüche, bei dem die komplexe Lamelle (22) einen proximalen Teil (24) umfasst, der sich von der Kontaktseite des Blocks aus erstreckt und der eine im Wesentlichen konstante Breite aufweist.

11. Reifen nach Anspruch 10, bei dem die komplexe Lamelle (22) einen Zwischenübergangsteil (28) umfasst, der den proximalen Teil mit dem distalen Teil (26) verbindet und eine Breite aufweist, die entlang ihrer Tiefe fortschreitend variiert.

12. Reifen nach einem der vorhergehenden Ansprüche, bei dem die komplexe Lamelle (22) im Neuzustand des Laufstreifens eine gewellte Spur auf der Kontaktseite des Blocks bildet.

13. Reifen nach einem der vorhergehenden Ansprüche, bei dem die komplexe Lamelle (22) den Block in zwei im Wesentlichen identische Blockteile trennt.

14. Reifen nach einem der vorhergehenden Ansprüche, bei dem jeder Block (12) der Mehrzahl von Blöcken ferner mit mindestens einer Lamelle (36) versehen ist, die sich von der Kontaktseite des Blocks aus erstreckt, eine Tiefe Ps hat, die geringer als die Tiefe Pc der komplexen Lamelle ist, und eine im Wesentlichen konstante Breite in Richtung der Tiefe Ps aufweist, einfache Lamelle genannt, wobei sich der distale Teil (26) der komplexen Lamelle mindestens zum Teil über die einfache Lamelle hinaus erstreckt.

**15.** Reifen nach Anspruch 14, bei dem die einfache Lamelle vollständig in der ersten Materialschicht (38) des Laufstreifens gebildet ist.

**16.** Reifen nach Anspruch 14 oder 15, bei dem jeder Block der Mehrzahl von Blöcken eine Mehrzahl von einfachen Lamellen (36) umfasst, wobei die komplexe Lamelle (22) zwischen zwei einfachen Lamellen angeordnet ist.

**17.** Reifen nach einem der vorhergehenden Ansprüche, bei dem der Laufstreifen laufrichtungsgebunden ist.

**Claims**

**1.** Tyre comprising a tread comprising a plurality of blocks (12) separated when new in the circumferential direction by grooves (18) and provided with contact faces each forming part of the tread surface of said tread, each block of said plurality of blocks being provided with at least one sipe (22) extending from said contact face, having a depth Pc and having a width that can vary in the direction of the depth Pc, and known as a complex sipe, said width being at a maximum in a distal part (26) of said complex sipe, the tread when new comprises a first layer of material (38) delimiting the tread surface and at least one second layer of material (40) radially on the inside of said first layer, the first layer of material being formed in a first rubber composition and said second layer of material being formed in a second rubber composition different from the first rubber composition, said complex sipe (22) and the grooves (18) separating the blocks (12) are formed entirely in the first layer of material (38), **characterized in that** laterally on each side of said complex sipe, the second layer of material (40) extends, when viewed in transverse section in said block, beyond the bottom (30) of said complex sipe in the direction of the contact face of said block.

**2.** Tyre according to Claim 1, in which the radial distance separating the bottom (30) of said complex sipe and the top of the second layer of material situated laterally on each side of said complex sipe is comprised between 1.5 mm and 5 mm.

**3.** Tyre according to Claim 1 or 2, in which the interface (42) between the first and second layers of material has a wavy profile.

**4.** Tyre according to any one of the preceding claims, in which each portion of the second layer of material (40) situated beyond the bottom (30) of said complex sipe extends into said block along the majority of the portion of the first layer of material (38) that surrounds said complex sipe.

**5.** Tyre according to any one of the preceding claims, comprising at least one tread wear indicator of height T projecting from the bottom of one of the grooves (18), and in which, laterally on each side of said complex sipe, the second layer of material (40) extends, when viewed in transverse section in said block, beyond the height T of the wear indicator.

**6.** Tyre according to any one of the preceding claims, in which the difference in the glass transition temperature between the first rubber composition and the second rubber composition is, in terms of absolute value, comprised between 4°C and 30°C, and preferably comprised between 5°C and 10°C, the glass transition temperature being measured on test specimens such as those described in standard ASTM D 5992 - 96 at figure X2.1.

**7.** Tyre according to any one of the preceding claims, in which the difference between the complex dynamic shear modulus G* (23°C, 10%, 10Hz) of the first rubber composition and that of the second rubber composition is comprised between 0 and 40%, preferably comprised between 10 and 30%, the complex dynamic shear modulus being measured on test specimens such as those described in standard ASTM D 5992 - 96 at figure X2.1.

**8.** Tyre according to any one of the preceding claims, in which said complex sipe (22) extends substantially parallel to two of the grooves (18) that delimit said block.

**9.** Tyre according to any one of the preceding claims, in which the bottom (30) of the distal part of said complex sipe is connected, in said view in cross section, by a fillet (32) to each of the walls of rubber (22a, 22b) delimiting said sipe.

**10.** Tyre according to any one of the preceding claims, in which said complex sipe (22) comprises a proximal part (24) which extends from the contact face of said block and which has a substantially constant width.

**11.** Tyre according to Claim 10, in which said complex sipe (22) comprises an intermediate joining part (28) connecting the proximal part to the distal part (26) and having a width that varies progressively along its depth.

**12.** Tyre according to any one of the preceding claims, in which said complex sipe (22), when the tread is new, forms a wavy trace on the contact face of said block.

**13.** Tyre according to any one of the preceding claims, in which said complex sipe (22) divides said block into two substantially identical block parts.

**14.** Tyre according to any one of the preceding claims, in which each block (12) of said plurality of blocks is further provided with at least one sipe (36) extending from the contact face of said block, having a depth Ps less than the depth Pc of said complex sipe and having a width that is substantially constant in the direction of the depth Ps, known as a simple sipe, the distal part (26) of said complex sipe extending at least in part beyond said simple sipe.

**15.** Tyre according to Claim 14, in which said simple sipe is formed entirely in the first layer of material (38) of the tread.

**16.** Tyre according to Claim 14 or 15, in which each block of said plurality of blocks comprises a plurality of simple sipes (36), said complex sipe (22) being positioned between two simple sipes.

**17.** Tyre according to any one of the preceding claims, in which the tread is directional.

FIG.1

FIG.2

EP 3 658 390 B1

FIG.4

FIG.3

FIG.5

**RÉFÉRENCES CITÉES DANS LA DESCRIPTION**

**Documents brevets cités dans la description**

- WO 2017105496 A1
- EP 0540340 A2
- EP 0914975 A2
- JP H05254314 A